(19)

Europäisches
Patentamt
European
Patent Office
Office européen
des brevets

(11)  **EP 2 246 403 A1**

(12)  **EUROPEAN PATENT APPLICATION**

(43) Date of publication:
**03.11.2010 Bulletin 2010/44**

(51) Int Cl.:
**C09J 133/00** (2006.01)   **C09J 201/00** (2006.01)

(21) Application number: **10160155.7**

(22) Date of filing: **16.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.04.2009 EP 09159043**

(71) Applicant: **Akzo Nobel Coatings International B.V.
6824 BM Arnhem (NL)**

(72) Inventors:
• **Motzet, Hubert
D-48720, Rosendahl (DE)**

• **Van Streun, Karel Hindrik
NL-6835 CT, Arnhem (NL)**
• **Molenaar, Hendrikus Alfonsus
NL-2026 ZE, Haarlem (NL)**

(74) Representative: **Alferink, Petrus J.T.
Akzo Nobel N.V.
Legal, IP & Compliance
P.O. Box 9300
6800 SB  Arnhem (NL)**

(54)  **Waterborne adhesive formulations**

(57)    This application relates to floor or contact adhesives which are provided as a water-borne formulation comprising: a cross-linkable binder resin having a glass transition temperature (Tg) of less than +10°C; Optionally, a crosslinking agent;, and, optionally a tackifier and / or a plasticiser; wherein the volatile organic compound (VOC) level of said formulation is less than 0.5% by weight. The cross-linkable binder resin should preferably have a glass transition temperature (Tg) in the range from +10°C to -90°C and furthermore should preferably comprise a carbonyl functional (meth)acrylate or vinyl copolymer prepared from a monomer mixture comprising alkyl (meth)acrylate ester monomers and / or vinyl monomers, and diacetonacrylamide (DAAM) monomers. The preferred utility of the water-borne formulation is as a floor or flooring adhesive.

EP 2 246 403 A1

**Description**

FIELD OF THE INVENTION

The present invention relates to a formulation for use as a floor or contact adhesive. More particularly, the present invention relates to a waterborne formulation characterized by a low content of volatile organic compounds and by an advantageous balance of adhesive properties.

BACKGROUND OF THE INVENTION

Many products are assembled using adhesives. For example, various flooring products made from vinyl and carpet and the like are permanently adhered to a surface or other substrate through the use of an adhesive. Commonly used flooring adhesives include those sold under the trademarks Taylor Envirotec 2090 Vinyl Adhesive and Taylor Envirotec 2055 Premium Carpet Adhesive, sold by W.F. Taylor Co. of Fontana, California USA.

National and State Governments are rightfully enacting legislation to control the level of volatile organic compounds (VOC) and solvents in commercial products. With respect to adhesives which were historically solvent-borne, this legislation has prompted the manufacturers of contact and floor adhesives to investigate low- and no solvent adhesives. For example, JP2007291234 (Izumi Misao) details the lowering of solvent levels in moisture-cure urethane adhesives, which use isocyanates such as methylene diphenyl 4,4'-diisocyanate (MDI) and toluene diisocyanate (TDI), and would, traditionally, emit solvents upon application.

As manufacturers continue to reformulate such adhesives, they are facing the difficult challenge of creating environmentally friendly products without compromising performance characteristics such as: adhesion (tack and peel); cohesion (room temperature shear strength and elevated temperature or hot shear strength); and, resistances to water degradation, water whitening, heat and humidity. Considering waterborne formulations as the case in point, many binder (polymer) emulsion adhesive systems demonstrate good tack and peel performance but inadequate cohesive strength. Also, existing waterborne formulations - and particularly those which necessarily comprise plasticizers - tend to suffer from cold flow: This is the phenomenon whereby the hardened adhesive layer deforms under pressure over time, either due to stresses in the floor material or stresses induced by other, external factors such as the positioning of heavy furniture thereon for example, in the case of floor adhesives.

It is important to note that current waterborne floor adhesives are physically drying. There is still a need in the art to develop a waterborne formulation for use as a contact or floor adhesive that does not lose its tack properties during application but which has sufficient shear strength after drying to resist creep and cold flow: The adhesive's creep resistance should also be retained under adverse conditions, including elevated temperatures or plasticizer migration from a substrate which occurs e.g. with plasticized PVC flooring material.

STATEMENT OF THE INVENTION

In accordance with a first aspect of the present invention there is provided a water-borne, floor or contact adhesive formulation, said water-borne formulation comprising: a cross-linkable binder resin having a glass transition temperature (Tg) of less than +10°C; optionally, a crosslinking agent; and, optionally, a tackifier, a combination of tackifiers and / or a plasticiser; wherein the volatile organic compound (VOC) level of said formulation is less than 0.5% by weight. The preferred utility of the water-borne formulations of the present invention is as floor adhesives.

The formulations are preferably further characterized by a certain solid content. For floor adhesives this range is from 40 to 90 wt %, preferably from 60 to 85 wt%, provided that fillers and other raw materials have a density in the range from 1 to 5g/cm$^3$, that is the fillers have the same approximate density as those given in the examples of this document. For contact adhesives this range is from 20 to 80 wt%, preferably from 45 to 70 wt%, provided that fillers and other raw materials have the same approximate density as those given in the examples.

The water-borne binder resin may be self-crosslinking or externally cross-linking: In the latter case the water-borne formulation will necessarily comprise cross-linking agents. In both of these cases it is preferable that the cross-linkable binder resin of the formulation has a glass transition temperature (Tg) in the range from +10°C to -90°C. For instance, the cross-linkable binder resin may have a glass transition temperature of from 0°C to -80°C or from -5°C to -75°C. As further examples, binder resins having a glass transition temperature of from -5°C to -40°C may be mentioned.

Upon application of the formulation to a surface or substrate the water begins to evaporate from the applied film, bringing the colloidally dispersed, discrete particles of the binder resin (polymer) closer together. With further evaporation, the colloidal particles deform creating polyhedral structures: The crosslinking of the binders allows further coalescence of the binder particles and eventually film formation. Although the rate of drying - and thus by extension the drying temperature - influences the degree of particle deformation, it is thought that the low Tg of the cross-linkable binders further facilitates this deformation through the polymer chain mobility at the temperatures typically used for drying. Essentially no coalescing agents or co-solvents are required. Unexpectedly, the resultant adhesives demonstrate a significantly improved balance of cohesive properties (shear strength, cold flow, heat resistance, plasticiser resistance) versus application properties, in particular the tack level.

The binder resin of this invention typically has a functionality provided by at least one group selected from: epoxide groups; carbonyl groups; carboxyl groups; hydroxyl groups; thiol groups; amino groups; hydrazide groups; hydrazine groups; hydroxyl-amino groups; oxim groups; oximether groups; oxyamine groups; isocyanate groups; acetoacetate groups; (meth)acryloyl groups; olefinically unsaturated groups; allyl groups; sulfonylvinyl groups; 2-hydroxyethyl sulfone groups; silanol groups; acyloxysilanes; and, alkoxysilane groups. These functional groups may optionally be present in blocked form. Optimum results have been obtained using a cross-linkable binder resin having carbonyl functionality, wherein the binder comprises the polymerization product of a carbonyl monomer and a monomer polymerizable with said carbonyl monomer. The cross-linkability of these carbonyl-functional binders is preferably imparted by carbonyl-reactive amine, hydrazine or hydrazide functional groups either borne on the carbonyl-functional binder itself or provided by discrete compounds bearing these functional groups.

The use of plasticizers in the present formulation is optional and is not preferred. It may be desirable however to provide the formulation with at least one tackifier or tackifying resin in order to enhance the formulations adhesive properties. Preferably the tackifier may comprise a hard tackifying resin, a soft tackifying resin or a blend thereof. More preferably, the formulation is provided with either: a hard tackifying resin comprising a rosin acid or a derivative thereof having a Tg in the range from +20° to +120°C; a soft tackifying resin comprising a rosin acid ester or a derivative thereof having a Tg in the range from -80° to +40°C; or, a blend thereof.

In accordance with a second aspect of the invention, there is provided a method of adhering two substrates comprising the steps of applying the formulation as defined above to one of said substrates; drying said formulation to a tacky condition; and, assembling the two substrates. There is still further provided an assembly of two substrates obtainable using this method.

In accordance with a third aspect of the invention, there is provided a method of adhering two substrates comprising the steps of applying a formulation as defined above to each of said two substrates, drying said formulation to a tacky state and assembling the two substrates. There is still further provided an assembly of two substrates obtainable using this method.

DEFINITIONS

The term "comprising" as used herein will be understood to mean that the list following is non-exhaustive and may or may not include any other additional suitable items, for example one or more further feature (s), component (s), ingredient (s) and / or substituent (s) as appropriate.

As used herein a contact adhesive is an adhesive which must be applied to two surfaces and allowed some time to dry - typically up to 24 hours - before the two surfaces are pushed together. Once the surfaces are pushed together, the bond forms very quickly, hence, it is usually not necessary to apply pressure for a long time.

As is known in the art, the term "floor adhesive" may be used interchangeably with the term "flooring adhesive".

For the purpose of this invention a "waterborne" formulation comprising a binder means a dispersion of binder (s) in an aqueous carrier medium. Although very minor amounts of organic liquids may optionally be present, water is necessarily the principle component of the aqueous carrier medium and should comprise at least 95 wt.% thereof. The dispersion will typically comprise colloidally dispersed particles of the binder polymer(s).

A monomer is a substantially mono-disperse compound of low molecular weight - typically less than one thousand Daltons - that is capable of being polymerized.

Where the stem "(meth)acryl" is used in the present description and the claims this is intended to mean "acryl" and / or "methacryl".

As used herein, a hydrazine functional compound is a compound bearing a carbonyl-reactive functional group of formula $-NHNH_2$. Such functional groups may be a part of larger groups, such as those of formulae, $-R-C(=O)-NH-NH_2$, $-R-C(=O)-NH-N=C<$, $-R-NH-C(=O)NH-NH_2$, $-R-NH-C(=O)-NH-N=C<$, and $-R-NH-NH_2$ where R is a substituted or unsubstituted alkylene, alicyclic, or aryl.

As used herein, the term "volatile organic compound" (VOC) is defined as a carbon-containing compound that has a boiling point below 250°C at atmospheric pressure.

Measurement of the VOC emissions of the adhesive materials of the present invention should be conducted in accordance with ISO 11890-2: 2006. The measurement conditions of this ISO norm should be directed to quantitatively measure the full content of VOC, wherein VOC is as defined above in this patent description. The VOC should be expressed in weight % of the total adhesive formulation i.e. water is included in the total formulation and in the VOC calculation as well.

As used herein "solvents" are defined in accordance with the German Technical Rules for Dangerous Substances (TRGS) 610 as compounds with a boiling point below 200°C at atmospheric pressure and which are used to dissolve other materials.

If an organic liquid product has a boiling point region, then the onset (the lowest temperature) of the boiling point range at atmospheric pressure is taken as the nominal boiling point. Where necessary any measurement of the initial boiling point for materials should be conducted in accordance with ASTM Standard Test Method D1078-95, or its most current version.

Measurement of the solids content of adhesive materials pursuant to Subsection (c)(20) shall be conducted in accordance with EPA Test Method 24 (40 CFR 60, Appendix A).

The glass transition temperature (Tg) of copolymers can be calculated from the monomeric composition of the copolymer. If the copolymer is homogeneous and prepared via a statistical copolymerisation process, then the Tg can be calculated from the Tg values of all corresponding homopolymers, according to the Fox equation:

$$\frac{1}{Tg_m} = \frac{w_1}{Tg_1} + \frac{w_2}{Tg_2} + \frac{w_3}{Tg_3} + ....$$

Where:

$Tg_m$ : the Tg of the copolymer (in Kelvin)
$Tg_1$ : the Tg of the homopolymer of comonomer 1 (in Kelvin)
$Tg_2$ : the Tg of the homopolymer of comonomer 2; etc.
$w_1$ : the weight fraction of comonomer 1 in the coploymer; etc.

The actual glass transition temperature (Tg) of the cross-linkable binder resin can be determined by differential scanning calorimetry (DSC). The use of DSC to determine Tg is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. In accordance with these disclosures, the Tg's specifically measured in the current patent application have been measured and defined according to the following sample treatment procedure and DSC measurement method, except where otherwise indicated in the Examples.

The crosslinkable binder resin is diluted with deionised water to a solids content of 10-30 % by weight (b.w.), typically 25% and applied on a glass panel with an applicator bar or wired rod (as usual in laboratory work with coatings, paints and adhesives) in such a way that the film on the glass panel has a uniform dry layer thickness, and the maximum final dry layer thickness amounts to 40 micrometer (typical dry film thickness: 20 $\mu$m). The film application occurs at 23°C and 50 ($\pm$5) % Relative Humidity (RH). Then film drying of the horizontal panel is allowed for 4 hours at 23°C and 50 ($\pm$5) % RH, and thereafter the coated panel is further dried at 50°C for 20 hours in an air abstracted or air circulated, clean oven at 1 atmosphere pressure. In the oven no contamination is allowed from amine or other VOC sources. Subsequently, the coated panels are equilibrated at 23°C and 50 ($\pm$5%) RH for at least 16 hours, typically for 24 hours. Then a 5 to 10 mg sample from the dried film is taken and introduced into a DSC closed pan. The ramp speed is 5°C per minute. The first run is from -100°C to +100°C. The second run, after the sample has been cooled at a cooling rate of 20°C/min., covers the same temperature range and gives the defined Tg value of the binder resin. This is determined from the inflection point of the heat flow curve as a function of temperature. This is equivalent to the maximum of the derivative of the heat flow curve (or heat capacity) versus temperature.

Although not required, modulated DSC was employed in this methodology with a modulation period of 40 seconds and an amplitude of 1.0°C.

It will be recognized that, for certain binders, Tg values may be difficult to measure. For example, the Tg value of a core-shell binder which is characterized by a gradual gradient of composition from the core to the shell may be difficult to detect on account of it having a very broad Tg transition. In such circumstances, the position of the measured Tg value for a binder may be verified or confirmed using a standardized Minimum Film Forming Temperature (MFFT, °C) analysis, such as is most suitably provided by ASTM D 2354.

Detailed Description of the Invention

It is envisaged that the weight average molecular weight of the crosslinkable binder resin may be from 1000 to an upper maximum limit in molecular weight that can still be technically measured with the most updated and advanced equipment of gel permeation chromatography (GPC). For example, the cross-linkable binder resin for use in the invention may have a weight average molecular weight within the range from 1000 to 10,000,000 and more usually from 2,000 to 10,000,000. Intentionally pre-crosslinked binders and core-shell particles having a pre-crosslinked core may have still higher weight average molecular weight and still be used in this invention. The weight average molecular weight may be measured by gel permeation chromatography (GPC) also known as Size Exclusion Chromatography (SEC).

The binder resin of this invention typically has a functionality provided by at least one group selected from: epoxide groups; carbonyl groups; aldehyde groups; carboxyl groups; hydroxyl groups; thiol groups; amino groups; hydrazide groups; hydrazine groups; hydroxyl-amino groups; oxim groups; oximether groups; oxyamine groups; isocyanate groups; acetoacetate groups; (meth)acryloyl groups; olefinically unsaturated groups; allyl groups; sulfonylvinyl groups; 2-hydroxyethyl sulfone groups; silanol groups; acyloxysilanes; and, alkoxysilane groups. Functional groups, for example carboxyl groups, carbonyl groups, hydroxyl groups, isocyanate groups or amino groups, may optionally also be present in the binder resin in blocked form.

The water-borne binder resin may be self-crosslinking or externally crosslinking. With respect to the latter alternative, the water-borne formulations may thus comprise crosslinking agents. Selection of the optionally used crosslinking agents will depend on the type of cross-linkable groups in the binders and is familiar to the person skilled in the art. The crosslinking agents may be used individually or in combination. The molar ratio of crosslinkable groups and crosslinker groups, in the case of external crosslinkers, will typically be in the range from 1:20 to 20:1 and preferably from 1:3 to 3:1.

In a preferred aspect of the present invention the cross-linkable binder resin has carbonyl functionality and comprises the polymerization product of a carbonyl monomer and a base monomer polymerizable with the carbonyl monomer. In this aspect, the carbonyl functional groups on the binder are preferably crosslinked with carbonyl-reactive amine, hydrazine and / or hydrazide groups.

As used herein the term "carbonyl monomer" defines a mono-olefinically unsaturated monomer having an aldehyde group or a ketone group. The monoolefinic unsaturation in the carbonyl monomers of this invention is typically provided by (meth)acrylate, (meth)acrylamide, styryl or vinyl functionalities. Preferably the carbonyl monomer is selected from the group consisting of: acrolein; methacrolein; vinyl methyl ketone; vinyl ethyl ketone; vinyl isobutyl ketone; vinyl amyl ketone; acetoacetoxy esters of hydroxyalkyl (meth)acrylates; diacetoneacrylamide (DAAM); diacetone(meth)acrylamide; formylstyrol; diacetone (meth)acrylate; acetonyl acrylate; 2-hydroxypropyl acrylate-acetyl acetate; 1,4-butanediol acrylate acetylacetate; and, mixtures thereof.

The proportion of carbonyl functional groups in the crosslinkable binder resin polymer is preferably from 1 to 200 milli-equivalents per 100 g polymer, more preferably from 1 to 100 milli-equivalents per 100 g polymer.

The base monomer is generally at least one non-carbonyl-providing olefinically unsaturated monomer selected from the group consisting of: (meth)acrylonitrile; alkyl (meth)acrylate esters; (meth)acrylic acids; vinyl esters; and, vinyl monomers.

Suitable vinyl monomers include: 1,3-butadiene; isoprene; styrene; divinyl benzene; heterocyclic vinyl compounds; and, vinyl halides such as chloroprene. Preferably the vinyl monomers include ethylene, styrene, butadiene and isoprene.

Suitable vinyl esters include vinyl acetate, vinyl propionate, vinyl versatate and vinyl laurate.

Suitable alkyl esters of acrylic acid and methacrylic acid are those derived from $C_1$ to $C_{14}$ alcohols and thereby include as non-limiting examples: methyl acrylate; methyl methacrylate; ethyl acrylate; ethyl methacrylate; n-butyl acrylate; n-butyl methacrylate; 2-ethylhexyl acrylate; 2-ethylhexyl methacrylate; isopropyl acrylate; hydroxyethyl methacrylate; hydroxypropyl methacrylate; isopropyl methacrylate; n-propyl acrylate; n-propyl methacrylate; and, di(meth)acrylate esters of alkane diols such as 1,6-hexane diol diacrylate.

The cross-linkable resin bearing carbonyl functionality may be prepared by any suitable free-radical initiated polymerization technique - such as emulsion, mini-emulsion, solution, suspension, micro-suspension or bulk polymerization - with a free-radical initiator and appropriate heating (e.g. at 30°C to 90°C) being employed. The polymerization is normally effected in an aqueous medium, preferably with monomers which are soluble and / or emulsifiable in water. More particularly aqueous emulsion polymerization is used to prepare the polymer with optionally conventional emulsifiers or surfactants being used. The continuous phase of an aqueous emulsion polymerization process should comprise > 50 wt%, preferably > 80 wt% and more preferably > 95 wt% of water.

Suitable free radical initiators, which are conventionally used in an amount between 0.05 and 6 wt% based on the total monomer(s) used, include: hydrogen peroxide; alkyl hydroperoxides such as t-butylhydroperoxide and cumene hydroperoxide; persulphates such as $NH_4$-persulphate, K-persulphate and Na-persulphate; organic peroxides such as acyl peroxides and including benzoyl peroxide; dialkyl peroxides such as di-t-butyl peroxide; and, peroxy esters such as t-butyl perbenzoate.

The peroxy compounds are in some cases advantageously used in combination with suitable redox systems such as Na or K pyrosulphite or bisulphite, and isoascorbic acid. Metal compounds such as Fe.EDTA may also be usefully employed as part of the redox initiator system. Furthermore, azo-functional initiators, such as azo-bis(isobutyronitrile), 2,2'-azo-bis(2-methyl butane nitrile) (ANBN) and 4,4'-azobis(4-cyanovaleric acid) may also be used.

In this invention, carbonyl-reactive amine and / or hydrazine functional groups impart cross-linkability to the binder resin by virtue of the latter bearing carbonyl functional groups. The amine and/or hydrazine functional groups may be included in the inventive composition in various ways.

It is possible - but not preferred - for the amine and / or hydrazine functional groups to be borne on the carbonyl functional binder: This would allow the binder organic polymer (s) to undergo self-crosslinking. Hydrazine functional groups may preferably be introduced by polymerising into the binder resin at least one olefinically unsaturated monomer with (chain-pendant) hydrazinolysable groups which are subsequently reacted - in a water-miscible alcohol or a water-alcohol mixture - with a hydrazine yielding agent to convert at least a proportion of the hydrazinolysable groups into hydrazine functional groups. Examples of monomers providing chain-pendant hydrazinolysable groups include $\alpha$-chloracrylic acid and, more favorably, acid chlorides or $C_1$ to $C_4$ esters of (meth)acrylic acid. Hydrazinolysis may be realized by dissolving or dispersing the polymer followed by the addition of hydrazine or hydrazine hydrate. The hydrazine content, if present, of the binder resin is typically up to 300 milli-equivalents per 100g polymer, and is preferably from 0.4 to 200 milli-equivalents per 100g polymer.

It is more preferable that the carbonyl-reactive amine and/or hydrazine functional groups are present in the formulation by virtue of being provided as added, discrete compounds bearing 1 or more amine groups, 2 or more hydrazine functional groups, or 2 or more hydrazone functional groups. Useful discrete compounds in this regard are described in International Patent Publication No. WO 2006/086322, the disclosure of which is herein incorporated by reference.

Typically such added crosslinking agents will include ammonia, amines, diamines, triamines, hydroxyl-amines, oxims, oximethers, oxyamines, dihydrazines, dihydrazides, trihydrazides and polyhydrazides.

Preferably the cross-linking agent is selected from the group consisting of: oxalic acid dihydrazide; malonic acid dihydrazide; ethylmalonic acid dihydrazide; succinic acid dihydrazide; adipic acid dihydrazide; maleic acid dihydrazide; fumaric acid dihydrazide; tartaric acid dihydrazide; pimelic acid dihydrazide; itaconic acid dihydrazide; 9,10-dihydro-9,10-ethanoanthracene-11,12-dicarboxylic acid dihydrazide; 1,14-tetradecanoic dicarboxylacid dihydrazide; 1,20-icosanedioic acid dihydrazide; valine dihydrazide; orthophthalic acid dihydrazide; isophtalic acid dihydrazide; terephthalic acid dihydrazide; glutaric acid dihydrazide; sebacic acid dihydrazide; cyclohexane dicarboxylic acid bis-hydrazides; azelaic acid bis-hydrazides; carbonic acid hydrazides; carbodihydrazides; bis-semicarbazides; dihydrazines of aromatic hydrocarbons e.g. 1,4-dihydrazinebenzene and 2,3-dihydrazinonaphtalene; dihydrazinoalkynones; and, mixtures thereof.

More preferably the cross-linking agent comprises oxalic acid dihydrazide, succinic acid dihydrazide, adipic acid dihydrazide, sebacic acid dihydrazide, terephtalic acid dihydrazide or isophtalic acid dihydrazide, or mixtures thereof.


OPTIONAL COMPONENTS OF THE FORMULATION

The contact or floor adhesives of the present invention may optionally include a tackifier or tackifying resin. Tackifiers or tackifying resins generally refer to materials which are miscible with the cross-linkable binder resin, have a number average molecular weight ($M_n$) of 10,000 grams per mol (g/mol) or less, and a glass transition temperature (Tg) of -80°C or more as measured by differential scanning calorimetry (DSC).

For floor adhesives, the tackifier or tackifying resin is optionally present in the formulation in an amount of 200 % by weight or below, preferably 150% by weight or below, based on the dry weights of the tackifier or tackifying resins and the dry weight of the polymer binder. For contact adhesives the amount of tackifying resin(s) is 200% by weight or below, preferably 100% by weight or below and more preferably 50% by weight or below based on the dry weights of the tackifier or tackifying resins and the dry weight of the polymer binder.

Suitable tackifying resins for use in the present invention include rosins, rosin derivatives such as rosin alcohols and rosin esters, polyterpenes, aromatic modified polyterpene resins, coumarone indenes, hydrogenated resins and hydrocarbon resins. For hydrocarbon resins, mention may be made of alpha pinene-based resins, beta pinene-based resins, limonene-based resins, piperylene-based hydrocarbon resins, aromatic modified piperylene-based hydrocarbon resins, aromatic modified dicyclopentadiene-based hydrocarbon resins and aromatic modified co-terpene and ter-terpene resins. Exemplary rosin esters include the methyl ester of rosin and the rosin ester formed by esterifying diethylene glycol with rosin. These tackifying resins may be used individually or in blended form. It is envisaged for example that the skilled formulator may optimise the formulation by blending hard and soft tackifying resins.

In a preferred embodiment of the invention, the formulation is provided with a hard tackifying resin comprising a rosin acid or a derivative thereof characterized by having a Tg in the range from +20° to +120°C. The formulation may alternatively, but more preferably will additionally, comprise a soft tackifying resin comprising a rosin acid ester or a derivative thereof having a $T_g$ in the range from -80° to +40°C.

As mentioned above the presence of plasticizers is optional and not preferred in the present invention. The amount of the plasticizer is thus preferably from 0 to 10 wt %, more preferably from 0 to 2 wt.% and most preferably 0 to 0.5 wt.% based on the total solids in the water-borne formulation. When included, the plasticizer is preferably a low VOC containing, low toxic type. Examples of such plasticizers include: vegetable oils and derivatives thereof such as blown vegetable oils, partly hydrolysed vegetable oils, epoxidised vegetable oils and maleinated vegetable oils; di- or tri-glycol dibenzoates; alkylsulfonic esters of phenol or cresol (the latter being commercially available as Mesamoll® from Bayer); and, phthalates. Suitable phthalates are preferably selected from the lower toxicity types including, but not limited, di-*iso*-nonyl phthalate, di-*iso*-decyl phthalate and di-*iso*-undecyl phthalate.

The presence of further solvents in the water-borne formulation is similarly not preferred. The amount of additional solvents should be in the range from 0 to 0.5 wt.% and preferably from 0 to 0.2 wt.% based on the adhesive solids in the water-borne formulation. When included, examples of appropriate solvents include, but are not limited to, toluene, acetone, methylethylketone, cyclohexane, monohydric alcohols such as methanol and ethyl alcohol, and polyhydric alcohols.

The compositions may contain other conventional components including pigments, dyes, emulsifiers, surfactants, thickeners, heat stabilizers, levelling agents, anti-cratering agents, fillers, sedimentation inhibitors, UV absorbers, antioxidants, waxes, (anti-)slip agents, wetting agents, antifoaming and/or defoaming agents, fungicides, bactericides and other biocides, protective colloids and the like. These components may be introduced at any stage of the production process of the formulations including being added as a premix, or may be added subsequently. It may be desired to include a flame retardant, such as ammonium polyphosphate or aluminium trihydrate, to enhance the fire retardant properties. It may also be desirable to enhance the mechanical properties of the adhesive, particularly the hardness of the adhesive by further including in the formulation either an inorganic substance such as titanium oxide, alumina, colloidal silica, kaolin and talc, or an organic substance such as paraffin and powdery styrene.

Surfactants are utilized - in an amount between 0 to 15 wt%, preferably 0 to 8 wt% and more preferably 0 to 5 wt% by weight of the cross-linkable binder resin - to assist in the dispersion of that binder resin in water, even if the binder is self-dispersible. Suitable surfactants include conventional anionic, cationic and / or non-ionic surfactants and mixtures thereof. Preferred surfactants include fatty alcohols, ethoxylated fatty acids, fatty amides and / or Na-, K- and NH4- salts of: fatty acids; dialkylsulphosuccinates; sulphated oils; alkyl sulphonic acids; alkyl sulphates; and, sulphonic acids. Other useful anionic surfactants include alkyl or (alk)aryl groups linked to sulphonic acid groups, sulphuric acid half ester groups (linked in turn to polyglycol ether groups), phosphonic acid groups, phosphoric acid analogues and phosphates or carboxylic acid groups. Useful cationic surfactants include alkyl or (alk)aryl groups linked to quaternary ammonium salt groups. Non-ionic surfactants include polypropyleneglycol compounds and copolymers thereof and, preferably, polyethylene oxide compounds.

If desired, the formulations of the present invention may include other polymer dispersions such as, for example, polyurethane, polyamide, polyepoxide, polyvinyl acetate, polyethylene, polystyrene, polybutadiene, polyvinyl chloride, polyacrylate or other homopolymer and copolymer dispersions. These polymer dispersions can be added at any stage of the production process of the formulations, added via a premix or added subsequently. These polymer dispersions can sometimes be prepared or modified in-situ, for example by polymerisation of the monomers in the presence of the cross-linkable binder resin, or by polymerization of the monomers of the crosslinkable binder in the presence of the aforementioned polymer dispersions.

General guidelines on how to formulate waterborne binders and adhesives may be found *inter alia* in: R. Jordan, R. Hinterwaldner, "Klebharze - Naturharze - Kohlenwasserstoffharze - Harzdispersionen - Phenolharze", Hinterwaldner Verlag Muenchen, 1994, section 5.8, especially pages 96-102; D.R. Gehman, "Acrylic Adhesives" in "Handbook of Adhesives", 3rd Ed., I. Skeist (Ed.), Van Nostrand Reinhold, New York, 1990, Chapter 25; and, P.A. Lovell, M.S. El-Aasser (Editors), "Emulsion Polymerization and Emulsion Polymers", John Wiley and Sons, Chichester, UK, 1997. The disclosures of these documents are herein incorporated by reference.

PROPERTIES AND APPLICATION OF THE FORMULATIONS

The waterborne formulations are suitably characterized by a certain solid content. For floor adhesives this range is from 40 to 90 wt %, preferably from 60 to 85 wt%, provided that fillers and other raw materials have the same approximate density as those given in the examples below (i.e. from 1 to 5 g/cm$^3$). For contact adhesives this range is from 20 to 80 wt%, preferably from 45 to 70 wt%, provided that fillers and other raw materials have the same approximate density as those given in the examples below (e.g. CaCO$_3$ having a density of 2.5 - 2.7 g/cm$^3$). It is to be noted that "wt%" is used herein for the solids content for practical and traditional reasons; in principle "volume %" governs the formulation properties. If, for example, heavier or lighter fillers are being used, the wt% should in all cases be recalculated into volume%.

The waterborne formulations should also maintain an appropriate viscosity for application onto a substrate. The viscosity, as measured by a Brookfield viscometer model RVF, with a #6 spindle, at 20 rpm and 20°C, can range from 100 to 100,000 cps. For contact adhesives that are to be suitable for spray application, the viscosity of the formulation may be in the range from 100 to 15000cps, but is typically from 200cps to 750cps and preferably from 400 to 500 cps. For contact adhesives that are to be applied by roller, brush or trowel, the viscosity will typically range from 10,000 to 50,000 cps and is preferably from 10,000 to 30,000cps. For floor adhesives, the viscosity is typically in the range from 10,000 to 100,000cps. The viscosity of the formulation may be adjusted to a desired range by the addition of water or a thickener, such as an acrylic polymer dispersion.

The present formulation is envisaged to be suitable for use as a floor adhesive for most interior and exterior construction projects. More particularly it may be used on flooring coverings based on plasticized PVC, textile, linoleum, rubber, polyolefins such as polyethylene, polypropylene and vinyl copolymers, and also on drywall, plaster, metal, masonry, concrete, brick, screed, leveling compounds and other cementitious substrates, ceramic tile, slate, and those treated lumber projects requiring an adhesive.

It is also envisaged that the formulation may be employed as a contact adhesive in many applications to bond a variety of substrates. Such a formulation may be especially useful when gluing two non-absorbing substrates, or when an immediate adhesive fixation is required.

The formulation may be applied to a surface or substrate by any conventional method including brushing, dipping, flow coating and spraying. Where the formulation is sprayed, it must have the proper rheology to allow good sprayability whilst minimizing dripping and over-spraying. Furthermore, spray gun tip clogging due to adhesive dispersion shear instability must be prevented at all costs. The formulation should also be compatible with the propellant system in order to minimize pulsing or edge banding. In these circumstances it may be advantageous to use a pressure pot or a self-contained canister such as those disclosed in U.S. Patent Nos. 6,848,599 and 6,905,084 (Hammarth et al.).

The aqueous carrier medium is removed from the applied formulation by natural drying or accelerated drying - through applying heat - to form a coating. Although the thickness of the coating layer is not particularly limited and varies depending on the specific application of the adhesive, it will generally be in the range from 0.1 to 10 mm, preferably 0.1 to 5 mm.

As the skilled applicator would be aware the optimum performance of the formulation will be obtained when the application surface(s) is clean and free of dust, dirt, mud, oil, snow, ice, standing water and other foreign materials prior to using adhesive.

EXAMPLES

The present invention is now illustrated by the following examples. Unless otherwise specified, all parts and percentages are on a weight basis.

The following abbreviations will also be adhered to in the Examples:

| | |
|---|---|
| SucDH | Succinic acid dihydrazide |
| ADH | Adipic acid dihydrazide |
| SebDH | Sebacic acid dihydrazide |
| TPhtDH | Terephtalic acid dihydrazide |
| | |
| AA | Acryl ic acid |
| APS | Ammonium persulphate (available from Fluka) |
| BA | n-Butyl acrylate |
| DAAM | Diacetone diacrylamide |
| E | Ethylene |
| KPS | Potassium persulphate |
| MMA: | Methyl methacrylate |
| SMBS | Sodium metabisulphite |
| tBHP | Tertiary butyl hydroperoxide |
| VAc | Vinyl acetate |
| VL | Vinyl laurate |
| VV | Vinyl versatate |
| | |
| Tg(Fox): | Glass rubber transition temperature calculated according to the Fox equation. |
| PS: | Particle size |
| RH: | Relative humidity |
| RT: | Room temperature |
| SD: | standard deviation |
| XLR | Crosslinker |

(continued)

| | |
|---|---|
| SucDH | Succinic acid dihydrazide |
| ADH | Adipic acid dihydrazide |
| SebDH | Sebacic acid dihydrazide |
| TPhtDH | Terephtalic acid dihydrazide |

Example A (synthesis of a carbonyl-functional binder emulsion and a control emulsion)

Example A-1: Synthesis of a carbonyl-functional binder emulsion

i) Preparation of the seed-latex

320.8 g demineralized water is pre-charged in a 4-necked glass reactor. The reactor is equipped with a reflux condenser, thermo-couple, and glass stirrer. The reactor is then exposed to vacuum followed by a nitrogen purge. This cycle is applied three times to remove oxygen. When the temperature of the reactor has reached 80°C, a mixture of 4.8g Dextrol OC-7525 (available from Dexter Chemical LLC), 1.2g APS and 35.8g deionised water is added to the reactor and is allowed to mix for approx. 2 minutes. Then a monomer feed comprising 118.8g MMA, 59.4g butyl methacrylate and 59.4 g BA is added over a 3 hours' period. After the monomers have been added, the reactor is kept at 80°C for at least one hour. The emulsion is then cooled to room temperature and filtered over a 30 $\mu$m nylon filter bag.

The seed latex was determined to have a particle size of 80 nm with a standard deviation of 19 nm as measured using the Coulter LS230 device. The solids content of the seed latex was found to be 40% by weight, as determined from the residual weight of the seed latex after heating in an oven at 140°C for 60 minutes. The pH of the seed latex was 2.5.

ii) Preparation of the DAAM-latex (WEBM011)

1017 g demineralised water and 22g seed-latex as prepared above are pre-charged in a 4-necked glass reactor. The reactor is equipped with reflux condenser, thermo-couple and glass stirrer. The reactor is then exposed to vacuum followed by a nitrogen purge. This cycle is applied three times to remove oxygen. When the temperature of the reactor has reached 80°C, a mixture of 30.4 g Dextrol OC-7525, 5.1g APS and 113 g deionised water together with a monomer feed comprising 137.7g MMA, 50.6g DAAM, 814.1g BA and 10.1g AA is added over the course of 3 hours. After addition, the reactor is kept at 80°C for at least one hour. The emulsion is then cooled to room temperature and a 10% NaOH-solution is added to adjust pH to 7. Then the latex is filtered over a 80 $\mu$m nylon filter bag.

The latex was determined to have a particle size of 390nm with a standard deviation of 59nm as measured using the Coulter LS230 device. The solids content of the latex was found to be 46.5% by weight, as determined from the residual weight of the latex after heating in an oven at 140°C for 60 minutes. The pH of the latex was 7.0.

The Tg value of the binder polymer (WEBM 011) was calculated using the Fox equation to be -35° C. Further binder characteristics have been summarised in Table 1 below.

Example A-2: Synthesis of a control binder emulsion

Preparation of the DAAM-free latex (WEBM016)

1091 g demineralised water and 23.9g seed-latex as prepared in Example A-1 are pre-charged in a 4-necked glass reactor. The reactor is equipped with a reflux condenser, thermo-couple, and glass stirrer. The reactor is then exposed to vacuum followed by a nitrogen purge. This cycle is applied three times to remove oxygen. When the temperature of the reactor has reached 80°C, a mixture of 33g Dextrol OC-7525 (ex Dexter), 5.5g APS and 128.5g deionised water together with a monomer feed comprising 191.8g MMA, 890.4g BA and 11g AA is added over the course of 3 hours. After addition, the reactor is kept at 80°C for one hour. The emulsion is then cooled to room temperature and a 10% NaOH aqueous solution is added to adjust pH to 7. Then the latex is filtered over a 80 $\mu$m nylon filter bag.

The latex was determined to have a particle size of 398nm with a standard deviation of 57nm as measured using the Coulter LS230 device. The solids content of the latex was found to be 46.4% by weight, as determined from the residual weight of the latex after heating in an oven at 140°C for 60 minutes. The pH of the latex was 7.1.

The Tg value of the binder polymer (WEBM 016) was calculated using the Fox equation to be -35°C. Further binder characteristics have been summarised in Table 1 below.

Example B

Example B-1: Synthesis of a carbonyl-functional binder emulsion and a control emulsion

According to the same procedures as in Examples A-1 and A-2, respectively, the carbonyl functional binder emulsions WEBM 005 and the control WEBM004 have been prepared. The Tg values of the two binder polymers WEBM005 and WEBM004 were calculated using the Fox equation to be -21°C. Further characteristics of these binders have been summarised in Table 1 below.

In addition, carbonyl functional binder emulsions WEBM003 and the control WEBM002 have been prepared in the same manner as WEBM005 and WEBM004 respectively, but with the exception that a 10% aqueous ammonia solution was used instead of the 10% NaOH aqueous solution to set the pH at 7. The composition, the Tg calculated using the Fox equation, and the other binder characteristics, including the particle size, were identical to WEBM005 and WEBM004, respectively (as shown in Table 1). The only minor difference was that the actual pH of WEBM002 was 7.0 versus pH = 6.8 for WEBM004.

Example B-2: Synthesis of a carbonyl-functional vinyl binder emulsion based on vinyl acetate / ethylene / vinyl laurate

The carbonyl functional vinyl acetate / ethylene / vinyl laurate copolymer latex was prepared in a continuous emulsion polymerisation process using a high pressure pilot scale loop reactor. This equipment has a piggable reaction zone, and on-line mass flow measurement of four feed phases including ethylene gas. Control of the reaction temperature was via a pneumatic water valve actuated by an ABB temperature controller. The thermocouple for this controller was situated in the material stream returning to the circulation pump, connection being made through the wall of the suction port. Control of reaction pressure was via a pressure sustaining valve built by Yatesons Stainless (UK) that was capable of offering any operating pressure up to 100 bar. The coil volume of the reaction zone is 1120 ml and the take-off coil volume is 1210 ml.

The raw materials, the levels used in the emulsion polymerisation and the final characteristics of the latex product (Latex E) have been mentioned in Table 1.

Process conditions

The liquid monomers were added as a pre-emulsion (vinyl acetate, vinyl laurate and diacetone acrylamide at the concentrations as given in Table 1) at a feed rate of 34.2 g/min. Other feed rates are: ethylene, 6 g/min.; water, 20 g/min; pre-emulsion of the surfactants (Hostapur SAS93, Gohsenol GL05, Ethylan CO35 (ex AkzoNobel Chemicals)), 54 g/min.; oxidant solution, 13 g/min.; and, reductant solution, 3 g/min.

The reaction zone was kept at 90°C and 95 bar. The shear rate was 750 sec$^{-1}$. The recycle to feed ratio was 160. The mean residence time of material in the reaction coil was 15 minutes and the mean residence time of material in the 95 bar zone was 31 minutes.

After passage through the pressure sustaining valve, the latex enters a collection vessel that is capable of tolerating pressure up to 10 bar. Small amounts of redox initiator are added to the collected material aiding further reaction of all monomers. This material was then transferred to an ordinary batch reactor at atmospheric pressure wherein precise control of the temperature was possible, and if needed, more initiator was added to reduce residual monomers to below 0.2 % (on polymer weight).

After cooling the latex to ambient temperature, Berol OX 91-6 (1.0 % solid surfactant on solid latex; ex. AkzoNobel Chemicals) was post-added to the binder emulsion. The final binder characteristics are in Table 1.

TABLE 1 :

| Composition and characteristics of carbonyl functional binders and control binders used in Examples A to H, and I. | | | | | | |
|---|---|---|---|---|---|---|
| Ingredients | WEBM011 | WEBM016 | WEBM005 | WEBM004 | WEBM019 | Latex E |
| | Carbonyl | Control | carbonyl | control | Carbonyl | carbonyl |
| *Monomer composition:* | | | | | | |
| MMA | 13.6 | 17.6 | 25 | 30 | 9.7 | - |
| BA | 80.4 | 81.4 | 69 | 69 | 79.3 | - |
| AA | 1.0 | 1.0 | 1.0 | 1.0 | 1.0 | - |

(continued)

| Composition and characteristics of carbonyl functional binders and control binders used in Examples A to H, and I. | | | | | | |
|---|---|---|---|---|---|---|
| Ingredients | WEBM011 | WEBM016 | WEBM005 | WEBM004 | WEBM019 | Latex E |
| | Carbonyl | Control | carbonyl | control | Carbonyl | carbonyl |
| DAAM | 5.0 | 0 | 5.0 | 0 | 10.0 | 2.5 |
| Vac | | | | | | 67.5 |
| VL | | | | | | 15 |
| E | | | | | | 15 |
| *Sum monomers (excl. seed):* | *100* | *100* | *100* | *100* | *100* | *100* |
| *Initiator (on 100 parts monomer feed):* | | | | | | |
| APS | 0.50 | 0.50 | 0.50 | 0.50 | 0.50 | |
| tBHP | | | | | | 0.16 |
| Trigonox C | | | | | | 0.02 |
| SMBS | | | | | | 0.53 |
| Iron sulphate | | | | | | 0.002 |
| *Stabilising system (% b.w., solids on total monomers):* | | | | | | |
| Dextrol OC 7525 | 0.75 | 0.75 | 0.50 | 0.50 | 0.75 | 0 |
| Ethylan CO35 | | | | | | 0.95 |
| Hostapur SAS93 | | | | | | 0.95 |
| Gohsenol GL05 | | | | | | 2.5 |
| Berol OX 91-6 * | | | | | | 1.0 * |
| Seed (BA/BMA/MMA) (%b.w. on monomers) | 0.87 | 0.87 | 0.87 | 0.87 | 0.87 | - |
| | | | | | | |
| Solids (% b.w.) | 46.5 | 46.4 | 46.5 | 46.6 | 46.5 | 55.2 |
| Tg(Fox) (°C) | -35 | -35 | -21 | -21 | -35 | -13 |
| Particle Size, S (+-SD) (in nm) | 390 (+-60) | 400 (+-60) | 380 (+-60) | 380 (+-60) | 400 (+-60) | 700, bimodal |
| pH | 7.0 | 7.1 | 6.9 | 6.8 | 7.0 | 4.0 |
| VOC (% b.w.) | <0.1 | <0.1 | <0.1 | <0.1 | <0.1 | <0.1 |
| *: post-added (after the emulsion polymerisation) | | | | | | |

Example C-1: Preparation of adhesives

Several model floor adhesive formulations were prepared (F1 to F4). The recipe used for the model floor adhesives which do not contain filler and which are used in the examples given, is shown in Table 2.

The adhesives were prepared on a laboratory scale in an amount of about 500 grams. A mechanical stirrer was used. The tackifier premix, consisting of a hard resin (rosin acid type) and a soft resin (a rosin acid ester) was heated at 80-85°C in an oven during one hour. The hot tackifier mix (80°C) was then slowly poured into the neutralised binder dispersion (see Table 2), while continuously stirring the mixture. The other adhesive components were added subsequently, according to Table 2, yielding the adhesive formulations with comparable pH, viscosities and solids content (as mentioned in Table 2).

The crosslinkable formulations contain 1.25 equivalents of crosslinker (expressed in molar ratios). The formulations without crosslinker were post-diluted with some deionised water to enable comparison between formulations that are of comparable solids content (58-59% b.w. solids).

TABLE 2:

| Recipe of the non-filled model floor adhesives prepared, to evaluate the adhesive properties. The ingredients are listed in relative parts by weight (the sum of the binder emulsion and tackifier mix being normalized to 100 parts by weight) | | | | |
|---|---|---|---|---|
| Ingredient | Formulation | Controls | | |
| Product name | F1, "Keto+XLR " | F2, "Keto, no XLR" | F3, "Keto-free + XLR" | F4, "Keto-free, no XLR" |
| WEBM005 (5% DAAM) | 63.3 | 63.3 | | |
| WEBM004 (no DAAM) | | | 63.2 | 63.2 |
| 10% NaOH aq. Solution | 1.5 | 1.5 | 1.5 | 1.5 |
| *Tackifier Premix of 80C:* | | | | |
| Liquid, soft tackifying resin (100% solids) based on rosin ester (Tg: -19°C) | 26 | 26 | 26 | 26 |
| Gum rosin (100% solids). (Tg: +32°C) | 11 | 11 | 11 | 11 |
| | | | | |
| 10% NaOH aq. Solution | 2.6 | 2.6 | 2.6 | 2.6 |
| ASE Thickener (acrylic based; 15-30% solids | 3.0 | 3.0 | 3.0 | 3.0 |
| 10% NaOH aq. | | | | |
| Solution | | | | |
| Biocide | 0.2 | 0.2 | 0.2 | 0.2 |
| | | | | |
| *pH-check, target value:* | 8 | 8 | 8 | 8 |
| *Crosslinker:* | | | | |
| ADH (10% aq. Premix) | 9.6 | | 9.6 | |

(continued)

| Recipe of the non-filled model floor adhesives prepared, to evaluate the adhesive properties. The ingredients are listed in relative parts by weight (the sum of the binder emulsion and tackifier mix being normalized to 100 parts by weight) | | | | |
|---|---|---|---|---|
| Ingredient | Formulation | Controls | | |
| Product name | F1, "Keto+XLR " | F2, "Keto, no XLR" | F3, "Keto-free + XLR" | F4, "Keto-free, no XLR" |
| SucDH (10% aq. Premix) | | | | |
| SebDH (10% aq. Premix) | | | | |
| Deionised water | | 9.6 | | 9.6 |
| 10% NaOH aq. Solution | | | | |
| Final pH: | 8.2 | 8.4 | 7.8 | 7.8 |
| Viscosity (C/P, 5000 s-1; Pa.s; before adding XLR or water) | 0.46 | 0.46 | 0.49 | 0.49 |
| Solids (% b.w.) | 59 | 58 | 59 | 58 |
| Equivalents XLR | 1.25 | 0 | 1.25 | 0 |
| VOC (% b.w.) | <0.1 | <0.1 | <0.1 | <0.1 |

Example C-2: Evaluation of the adhesive properties

The four adhesive formulations of Example C-1 (F1 to F4) were applied on birch wood panels (60x30 cm$^2$) with a trowel (type: TKB-A2; 280 g/m$^2$), under climate controlled conditions (23°C, 55% relative humidity). The gluelines of the adhesive layer were allowed to dry for certain periods of time (typically 15, 30, 45, 60 minutes). After these drying time intervals a strip of flooring material (5x30 cm$^2$) is adhered onto the adhesive layer on the horizontal panels. The strip is pressed onto the adhesive layer with a constant pressure using a roller (3.6 kg weight, making two manual forward and backward motions during several seconds). The flooring material used is plasticised PVC (Troplam 100; supplier: Gerflor Mipolam GmbH, Germany).

The four formulations of example C-1 (F1 to F4) were subject to typical floor adhesive tests.

a) Application Properties (Peel Strength / Tack)

After a contact time of 2 minutes the strip is removed manually from the adhesive in a 90° peel-off test, using a force gauge with a digital display (Mecmesin, Compact Gauge range max. 200 N; supplied by Kiffe-Rambold Messgeraete, Germany). The peak force measured is used in the evaluation. The peel-off force (peel strength, expressed in N/mm) as a function of the drying time gives important quantitative information about the adhesive's application properties such as tack, wet tack, dry tack and open time.

Peel strength values are given in Table 3. A commercially available textile adhesive (T) and a medium quality commercial universal adhesive (Um) have been measured in the same test procedure for comparison.

TABLE 3:

| Adhesive application properties: peel strength values (N/mm) as function of drying time (min.) of various formulations. | | | | | |
|---|---|---|---|---|---|
| | | Drying time (minutes) | | | |
| Formulation | Description | 15 | 30 | 45 | 60 |
| F1 | "Keto+XLR" | 0.14 | 0.74 | 0.76 | 0.78 |

(continued)

| Adhesive application properties: peel strength values (N/mm) as function of drying time (min.) of various formulations. | | | | | |
|---|---|---|---|---|---|
| | | Drying time (minutes) | | | |
| Formulation | Description | 15 | 30 | 45 | 60 |
| F2 | "Keto, no XLR" | 0.34 | 0.76 | 0.96 | 0.90 |
| F3 | "Keto-free + XLR" | 0.26 | 0.64 | 0.64 | 0.74 |
| F4 | "Keto-free, no XLR" | 0.14 | 0.62 | 0.72 | 0.74 |
| T | Commercial product | 0.31 | 0.29 | 0.34 | 0.28 |
| Um | Commercial product | 0.12 | 0.25 | 0.18 | 0.10 |

It can be concluded from Table 3 that the peel-off force (peel strength) as a function of drying time is slightly reduced by the crosslinker addition, but the peel-off curve is still good and substantially better than the commercial floor adhesive products.

b) Bond Strength

As a further test of the adhesive, the bond strength was measured following the methodology of EN1372. The adhesives were applied to a Birch wood panel as described above. The same plasticized PVC flooring material was then applied after 15 minutes of drying time, and pressed in the same way as described above (by a roller, manually). After a contact time of 24 hours at 23°C and 55% relative humidity, the strip was removed manually in a 90° peel-off test using the same peel-off force gauge as described above. The test was performed in duplicate and the results are shown in Table 4.

TABLE 4:

| Bond strength values after 24 hours of contact time at 23°C and 50 % RH. | | |
|---|---|---|
| Formulation | Description | Bond strength (N/mm) |
| F1 | "Keto+XLR" | 1.4 |
| F2 | "Keto, no XLR" | 1.4 |
| F3 | "Keto-free + XLR" | 1.3 |
| F4 | "Keto-free, no XLR" | 1.4 |
| T | Commercial product | 2.4 |
| Um | Commercial product | 1.2 |

According to EN 14259, the minimum bond strength required for floor adhesives used for PVC coverings is 1.0 N/mm. Table 4 shows that the bond strength values remain comparable when adding the crosslinker and that these values are above that demanded for floor adhesives in practice.

c) Shear strength

The shear strength of the adhesives was tested according to the guidelines of EN 1373 using a fibre reinforced cementitious substrate panel. The application of the adhesives was as described hereinbefore (trowel: TKB-A2; 23°C; 55% RH). After 15 minutes of drying, the strip of plasticised PVC flooring material (5 cm wide) was pressed onto the glue lines. The covering and application procedures with the roller as described before were used. After a contact time of 7 days (at 23°C, 55% RH) the test specimen were measured with a tensile tester (tensile speed: 20 mm/min.). The contact surface area between the adhesive layer and the PVC strip was 20 x 50 mm$^2$. All adhesives were applied and measured in triplicate. The averaged shear strengths over the triplicates are mentioned in Table 5. The standard deviations of the triplicate measurements are also given in the Table.

d) Cold Flow

The method to determine the cold flow was tested according to the guidelines of EN 1902. An uncoated fibre reinforced cementitious substrate panel plate was used according to the guidelines of EN1373. The application of the adhesive thereon was as described hereinbefore. After 15 minutes of drying, the strip of plasticised PVC flooring material (5 cm wide) was pressed onto the glue lines. The same covering and application procedure with the roller as described hereinbefore were used. After a contact time of 7 days (at 23°C, 55% RH) the test specimen were suspended and subject to the 2 kg load. The contact surface area between the substrate, the adhesive layer and the PVC strip was 50 x 120 mm$^2$. All adhesives were applied and measured in triplicate with the standard deviation also recited. A high performance commercially available universal adhesive product (U) was also evaluated for further comparison.

TABLE 5:

| Creep resistance properties of the adhesives: shear strength and cold flow | | | |
|---|---|---|---|
| Formulation | Description | Shear strength (N/mm$^2$) | Cold Flow (Class 1-6) |
| F1 | "Keto+XLR" | 0.52 +- 0.01 | 6 |
| F2 | "Keto, no XLR" | 0.27 +- 0.01 | 1 |
| F3 | "Keto-free + XLR" | 0.38 +- 0.03 | 1 |
| F4 | "Keto-free, no XLR" | 0.34 +- 0.02 | 1 |
| T | Commercial product | 0.49 +- 0.03 | 2.7 |
| U | Commercial, high performance | 0.35 +- 0.04 | 3 |
| Um | Commercial product | 0.32 +- 0.03 | 3 |

Results: Shear Strength (c) and Cold Flow (d)

In the field of floor adhesives the demand in practice for the shear strength of PVC floorings is 0.30 N/mm$^2$ (EN1373). It can be seen from Table 5, that addition of the crosslinker, compared to the control adhesive formulation F2, leads to a substantial increase in the shear strength (from 0.27 (F2) up to 0.52 N/mm$^2$ (F1)). This increase is thereby from below the demanded level to substantially above that demand.

As is known in the art, the unit of cold flow is "class": The higher the class, the better the resistance to creep. In the field of floor adhesives class 1 is considered as unacceptable, class 2 is border-line and class 3 is acceptable. The cold flow results of the evaluated adhesive formulations are given in Table 5. All triplicated results were identical (except textile adhesive T: class 3, 3, 2).

It is clear that the addition of crosslinker is highly beneficial for the cold flow resistance. All control adhesives (F2, F3, F4) only achieved class 1, while the 2 kg weight fell within 1 day. The crosslinkable adhesive F1 resisted for at least 52 days with a weight of 6 kg without any failure. In terms of time exposure and load (shear stress) the increase in creep resistance in the cold flow experiment due to the incorporation of the crosslinking mechanism was at least a factor of 150.

There is an agreement between the cold flow results and the shear strength values obtained (Table 5). It can be remarked that the increase in shear strength due to the introduction of a crosslinking mechanism - compared to the same adhesive formulation containing the same binder composition without crosslinking ability - also provides for significantly improved cold flow results (i.e. higher class).

Finally, it can be concluded that the balance of the adhesive's creep resistance properties - as shown here by cold flow and shear strength - with the adhesive's application properties such as tack behaviour and peel strength curves during the adhesive application process, has been significantly improved by introducing a crosslinking mechanism.

Example D: Filled adhesives

This improvement in creep resistance properties can also be demonstrated by adhesive formulations according to the present invention that also contain fillers.

The preparation procedure for this Example was analogous to that for the non-filled adhesives of the previous Example C. However a dispersing agent and a filler (chalk) having a density of 2.5 g/cm$^3$ were also added to the formulations: The filled adhesive formulations have been detailed in Table 6 and as shown therein, the adhesive formulations have comparable pH (pH=7.2-7.4), viscosities and solids content.

TABLE 6:

| Formulation compositions of the filled adhesives in relative parts by weight (total formulation including crosslinker: 106.6 parts by weight) | | |
|---|---|---|
| Ingredient | Formulation | Control |
| Product name | F5 , "Keto+XLR" | F6 , "Keto, no XLR" |
| WEBM005 (5% DAAM) | 32.3 | 32.3 |
| Deionised water | 5.1 | 5.1 |
| Surfactant (Alkyl Polyglycol Ether) | 0.5 | 0.5 |
| Defoamer (Modified Silicone Oil) | 0.2 | 0.2 |
| | | |
| Tackifier (Modified Rosin Ester) | 14.2 | 14.2 |
| Dispersant (Sodium Polyacrylate) | 0.5 | 0.5 |
| Thickener (Acryl-Methacrylic acid ester copolymer) | 1.3 | 1.3 |
| 10% NaOH aq. Solution | 0.7 | 0.7 |
| Filler (Chalk) | 46.5 | 46.5 |
| Surfactant (Alkyl Polyglycol Ether) | 0.5 | 0.5 |
| Biocide | 0.2 | 0.2 |
| | | |
| *pH-check:* | 7.3 | 7.3 |
| *Crosslinker:* | | |
| ADH (10% aq. Premix) | 4.6 | |
| SucDH (10% aq. Premix) | | |
| SebDH (10% aq. Premix) | | |
| Deionised water | | 4.6 |
| 10% NaOH aq. Solution | | |
| Final pH: | 7.2-7.4 | 7.2-7.4 |
| Viscosity (C/P, 5000 s-1; Pa.s; | 1.1 | 1.1 |
| before adding XLR or water) | | |
| Solids (% b.w.) | 73 | 72 |
| Equivalents XLR | 1.2 | 0 |
| VOC (% b.w.) | <0.1 | <0.1 |

The application of the adhesive formulations and the tests applied thereto also followed the methodology of Example C. The results from the triplicated shear strength (EN 1373) and cold flow tests are given in Table 7. The standard deviations of the triplicate measurements are also given in that Table.

TABLE 7:

| Creep resistance properties of the filled adhesives: shear strength and cold flow | | | |
|---|---|---|---|
| Formulation | Description | Shear strength (N/mm$^2$) | Cold Flow (Class 1-6) |
| F5 | "Keto+XLR" | 0.46+-0.02 | 6 |
| F6 | "Keto, no XLR" | 0.34 +- 0.05 | 2 |
| T | Commercial product | 0.49 +- 0.03 | 2.7 |
| U | Commercial, high performance | 0.35 +- 0.04 | 3 |
| Um | Commercial product | 0.32 +- 0.03 | 3 |

Table 7 demonstrates that the incorporation of the crosslinker into the adhesive formulation based on a carbonyl functional binder and also containing a high level of filler, leads to significantly improved creep resistance properties such as shear strength and cold flow. These properties are much improved compared to the commercial control adhesives.

Example E: Crosslinking with SucDH

The advantageous creep resistance properties of the formulations according to this invention can also be demonstrated with other crosslinker types.

The preparation procedure of this Example was analogous to that of Examples C and D. The tackifiers, the dispersing agent, the filler (chalk, density 2.5 g/cm$^3$) and the other components added are described in Table 8. The formulation characteristics (final pH, solids content, VOC level) of both the crosslinkable adhesives and the control adhesives are also given in Table 8. The level of succinic acid dihydrazide (SucDH) added was 1.2 equivalents (expressed in molar ratios).

TABLE 8:

| Formulation examples for SucDH crosslinkable adhesives in relative parts by weight (Non-filled model adhesives: the sum of binder and tackifier mix has been normalized on 100 parts by weight; Filled adhesives: the total formulation including crosslinker contains 106 parts by weight) | | | | |
|---|---|---|---|---|
| Ingredient | Non-filled | Non-filled control | Filled | Filled, control |
| Product name | F7: "Keto+XLR" | F2, "Keto, no XLR" | F8 "Keto + XLR" | F6, "Keto, no XLR" |
| WEBM005 (5% DAAM) | 63.3 | 63.3 | 32.3 | 32.3 |
| 10% NaOH aq. Solution | 1.5 | 1.5 | | |
| Tackifier Premix of 80 C: | | | | |
| Soft Tackifying Resin (Liquid Rosin Ester) | 26 | 26 | | |
| Hard Tackifying Resin (Gum Rosin, 100% solids) | 11 | 11 | | |
| 10% NaOH aq. Solution | 2.6 | 2.6 | | |
| Thickener (Aq. dispersion of Acrylic copolymer having carboxyl groups) | 3.0 | 3.0 | | |
| 10% NaOH aq. Solution | | | | |
| Deionised water | | | 5.1 | 5.1 |

(continued)

| Formulation examples for SucDH crosslinkable adhesives in relative parts by weight (Non-filled model adhesives: the sum of binder and tackifier mix has been normalized on 100 parts by weight; Filled adhesives: the total formulation including crosslinker contains 106 parts by weight) | | | | |
|---|---|---|---|---|
| Ingredient | Non-filled | Non-filled control | Filled | Filled, control |
| Surfactant (Alkyl Polyglycol Ether) | | | 0.5 | 0.5 |
| Defoamer (Modified | | | 0.2 | 0.2 |
| Silicone Oil) | | | | |
| Tackifier (Modified Rosin Ester) | | | 14.2 | 14.2 |
| Dispersant (Sodium Polyacrylate) | | | 0.5 | 0.5 |
| Thickener (Acryl-Methacrylic acid ester copolymer) | | | 1.3 | 1.3 |
| 10% NaOH aq. Solution | | | 0.7 | 0.7 |
| Filler (chalk) | | | 46.5 | 46.5 |
| Surfactant (Alkyl Polyglycol Ether) | | | 0.5 | 0.5 |
| | | | | |
| Biocide | 0.2 | 0.2 | 0.2 | 0.2 |
| | | | | |
| *pH-check:* | 8.7 | 8.7 | 7 | 7 |
| *Crosslinker.* | | | | |
| SucDH (10% aq. Premix) | 8.0 | 0 | 3.9 | 0 |
| SebDH (10% aq. Premix) | | | | |
| Deionised water | | 9.6 | | 4.6 |
| 10% NaOH aq. Solution | | | | |
| Final pH: | 8.3 | 8.4 | 7.2-7.4 | 7.2-7.4 |
| Viscosity (C/P, 5000 s-1; Pa.s; before adding XLR or water) | 0.46 | 0.46 | 1.1 | 1.1 |
| Solids (% b.w.) | 59 | 58 | 72 | 72 |
| Equivalents XLR | 1.25 | 0 | 1.2 | 0 |
| VOC (% b.w.) | <0.1 | <0.1 | <0.1 | <0.1 |

The shear strength values were measured as described in previous examples (EN1373). The results shown in Table 9 are values averaged over triplicates with the standard deviation also recited.

TABLE 9:

| Creep resistance properties of the filled adhesives measured as shear strength | | |
|---|---|---|
| Formulation | Description | Shear strength (N/mm2) |
| F7 | "Keto+SucDH", unfilled | 0.43 +- 0.03 |
| F2 | "Keto, no XLR", unfilled | 0.27 +- 0.01 |

(continued)

| Creep resistance properties of the filled adhesives measured as shear strength | | |
|---|---|---|
| Formulation | Description | Shear strength (N/mm2) |
| F8 | "Keto+SucDH", filled | 0.47 +- 0.01 |
| F6 | "Keto, no XLR", filled | 0.34 +- 0.05 |
| T | Commercial product | 0.49 +- 0.03 |
| U | Commercial, high performance product | 0.35 +- 0.04 |
| Um | Commercial product | 0.32 +- 0.03 |

Table 9 shows that incorporation of the crosslinker SucDH in the adhesive formulation based on a carbonyl functional binder leads to significantly improved creep resistance properties as exemplified by the improved shear strength. The improvement was shown to apply for both a non-filled and a heavily filled adhesive (60% by weight chalk on total solid weight).

Example F: Carbonyl functional vinyl terpolymer emulsion (VAc / E / Vinyl laurate)

The carbonyl functional terpolymer vinyl latex based on vinyl acetate / ethylene / vinyl laurate, as prepared according to the method of example B-2, was evaluated for its adhesive properties. The recipe used for the model floor adhesives is shown in Table 10: the adhesives do not contain filler.

The adhesives were prepared on a laboratory scale in an amount of about 500 grams. A mechanical stirrer was used.

The tackifier premix, consisting of a hard resin (rosin acid type) and a soft resin (a rosin acid ester) was heated at 80°-85°C in an oven during one hour. The hot tackifier mix (80°C) was then slowly poured into the binder dispersion (see Table 10), while continuously stirring the mixture. The other adhesive components were added subsequently, according to Table 10, yielding adhesive formulations with comparable pH, viscosities and solids content (as mentioned in Table 10).

The crosslinkable formulation contains 1.25 equivalents of crosslinker (expressed in molar ratios). The formulation without crosslinker was post-diluted with some deionised water, to be able to make comparisons between formulations that are of a comparable solids content (70-71 % b.w. solids). Also, the non-crosslinkable control adhesive was prepared with the same, low amount of a plasticiser (tris(2-butoxyethyl)phosphate; see Table 10) to compensate theoretically for the slight plasticising effect of the potentially non-reacted crosslinker.

TABLE 10:

| Recipe of the non-filled model floor adhesives (in relative parts by weight) prepared to evaluate the adhesive properties of a vinyl copolymer carbonyl functional latex. | | |
|---|---|---|
| Ingredient | Formulation | Control |
|  | F9, "Keto+XLR" | F10, "Keto, no XLR" |
| Latex E (Binder VAc/E/VL, 2.5% DAAM) | 57.5 | 57.5 |
|  |  |  |
| *Tackifier Premix of 80 C:* |  |  |
| Soft tackifying resin (Liquid rosin ester) | 28 | 28 |
| Hard tackifying resin (rosin acid type, 100% solids) | 12 | 12 |
| 10% NaOH aq. Solution | 0.3 | 0 |
|  |  |  |
| *pH-check, target value:* | 4 | 4 |

(continued)

| Recipe of the non-filled model floor adhesives (in relative parts by weight) prepared to evaluate the adhesive properties of a vinyl copolymer carbonyl functional latex. | | |
|---|---|---|
| Ingredient | Formulation | Control |
| *Crosslinker:* | | |
| ADH (10% aq. Premix) | 5.1 | 0 |
| SucDH (10% aq. Premix) | | |
| SebDH (10% aq. Premix) | | |
| Plasticiser (Tris(2-butoxyethyl)phosphate) | 0 | 0.4 |
| Deionised water | | 3.7 |
| 10% NaOH aq. Solution | | |
| Final pH: | 4.1 | 3.6 |
| Solids (% b.w.) | 70 | 71 |
| Equivalents XLR | 1.25 | 0 |
| VOC (% b.w.) | <0.1 | <0.1 |

The adhesives were evaluated for their application properties in the same way as in Example C (substrates: birch wood and plasticised PVC flooring material).

a) Application Properties (Peel Strength)

The peel strength values as a function of drying time, are given in Table 11. A commercially available textile adhesive (T) and a high quality (U) and a medium range (Um) commercial universal adhesive (U) have again been measured in the same test procedure for comparison.

TABLE 11:

| Adhesive application properties: peel strength values (N/mm) as function of drying time (minutes) of formulations based on vinyl copolymer binders. | | | | | | |
|---|---|---|---|---|---|---|
| | | Drying time (minutes) | | | | |
| Formulation | Description | 15 | 30 | 45 | 60 | 105 |
| F9 | "Keto+XLR" | 0.30 | 0.99 | 1.21 | 1.16 | 1.01 |
| F10 | "Keto, no XLR" | 0.42 | 1.20 | 1.15 | 1.10 | 0.95 |
| T | Commercial product | 0.31 | 0.29 | 0.34 | 0.28 | 0.1 |
| U | Commercial, high performance product | 0.59 | 0.93 | 0.91 | 0.77 | - |
| Um | Commercial product | 0.12 | 0.25 | 0.18 | 0.10 | - |

It can be concluded from Table 11 that the peel-off force (peel strength) as a function of drying time remains comparable when adding the crosslinker, and that the peel-off curve is very good and substantially better than some commercial adhesives recognised in the field of floor adhesives.

b) Shear strength

The shear strength of the adhesives was tested according to EN 1373, between a cementitious substrate panel and plasticised PVC flooring material, as described in Example C.

The shear strength values measured and averaged over triplicates are given in Table 12.

TABLE 12:

| Creep resistance properties of the adhesives measured by shear strength | | |
|---|---|---|
| Formulation | Description | Shear strength (N/mm2) |
| F9 | "Keto+XLR" | 0.30 |
| F10 | "Keto, no XLR" | 0.22 |
| T | Commercial product | 0.36 |
| U | Commercial, high performance | 0.34 |
| Um | Commercial product | 0.32 |

It can be seen from Table 12, that addition of the crosslinker, compared to the control adhesive formulation F10, leads to a substantial increase in the shear strength (from 0.22 up to 0.30 N/mm$^2$). This is from substantially below the normal level demanded in practice to this norm limit.

It can be concluded that the balance of creep resistance properties (as shown here by shear strength improvement) and application properties (tack behaviour and peel strength curves during the adhesive application process) has been significantly improved by introducing a crosslinking mechanism.

Example G: Adhesive properties

The adhesive formulation F11 and a control F12 were prepared in the same manner as formulations F1 and F2, respectively (Example C). The adhesives were prepared on a laboratory scale in an amount of about 1.5 kg. A mechanical stirrer was used.

The tackifier premix, consisting of a hard resin (rosin acid type) and a soft resin (a rosin acid ester) was heated at 80-85°C in an oven during one hour. The hot tackifier mix (80°C) was then slowly poured into the neutralised binder dispersion (see Table 13; binder from Example A), while continuously stirring the mixture. The other adhesive components were added subsequently, according to Table 13, yielding the adhesive formulations with comparable pH, viscosities and solids content (as mentioned in Table 13).

The crosslinkable formulation (F11) contains 0.8 equivalents of crosslinker (expressed in molar ratios). The formulation without crosslinker (F12) was post-diluted with some deionised water to enable comparison between formulations that are of comparable solids content (59 % b.w. solids).

TABLE 13:

| Recipes of the model floor adhesives prepared, to evaluate the adhesive properties | | |
|---|---|---|
| Ingredient | Formulation | Controls |
| Product name | F11, "Keto+XLR " | F12, "Keto, no XLR" |
| WEBM011 (Example A) | 63.3 | 63.3 |
| | | |
| 10% NaOH aq. Solution | 1.5 | 1.5 |
| *Tackifier Premix of 80 C:* | | |
| Soft tackifying resin (liquid rosin ester) | 26 | 26 |
| Hard tackifying resin (rosin acid type, 100% solids) | 11 | 11 |

(continued)

| Recipes of the model floor adhesives prepared, to evaluate the adhesive properties | | |
|---|---|---|
| Ingredient | Formulation | Controls |
| | | |
| 10% NaOH aq. Solution | 2.6 | 2.6 |
| Biocide | 0.2 | 0.2 |
| Thickener (Aq. Dispersion of an acrylic copolymer having carboxyl groups) | 3.0 | 3.0 |
| | | |
| *pH-check, target value:* | 8 | 8 |
| 10% NaOH aq. Solution | 2.15 | 2.15 |
| *Crosslinker:* | | |
| ADH (10% aq. Premix) | 6.1 | |
| SucDH (10% aq. Premix) | | |
| SebDH (10% aq. Premix) | | |
| Deionised water | | 6.1 |
| Final pH: | 8.3 | 8.3 |
| Viscosity (C/P, 1330 s-1; Pa.s; before adding XLR or water) | 1.4 | 1.4 |
| Solids (% b.w.) | 59 | 59 |
| Equivalents XLR | 0.80 | 0 |
| VOC (% b.w.) | <0.1 | <0.1 |

The formulations were evaluated for their adhesive properties, on birch wood with plasticised PVC as the flooring covering. The peel strength development during application, the bond strength after 15 min. of drying time and 24 hours of contact time (EN 1372), and the shear strength (EN1373, 23°C, 55% RH) were obtained using the same procedures described in Example C. The results have been summarised in Table 14. This includes the effect of prolonged storage time of the adhesive after addition of the crosslinker. Storage of the in-can adhesive (shelflife) is at room temperature (23°C).

TABLE 14:

| Adhesive properties of the adhesives F11 and F12 | | | | | | | | |
|---|---|---|---|---|---|---|---|---|
| | | | Peel strength, tack (N/mm) | | | | Bond strength | Shear strength |
| Formulation | Description | Shellife | 15 min. | 30 min. | 60 min. | 90 min. | (N/mm ) | (N/mm$^2$ ) |
| F11 | Keto+XLR | 10 min. | 0.19 | 0.78 | 1.42 | 1.40 | >1.3 | 0.44 |
| | | 4 h | 0.14 | 0.64 | 1.20 | 1.08 | >1.3 | 0.45 |
| | | 1 day (d) | 0.12 | 0.58 | 1.38 | 1.14 | >1.3 | 0.45 |
| | | 2 d | 0.10 | 0.44 | 0.80 | 0.90 | >1.3 | 0.43 |
| | | 6 d | 0.13 | 0.64 | 1.02 | 0.84 | >1.3 | 0.45 |
| | | 22 d | 0.15 | 0.38 | 0.86 | 0.84 | >1.3 | 0.40 |
| | | 48 d | 0.12 | 0.42 | 0.78 | 0.92 | 2.2 | 0.43 |
| | | 130 d | 0.22 | 0.82 | 0.78 | 1.02 | 1.6 | 0.42 |

(continued)

| Adhesive properties of the adhesives F11 and F12 | | | | | | | | |
| --- | --- | --- | --- | --- | --- | --- | --- | --- |
| | | | Peel strength, tack (N/mm) | | | | Bond strength | Shear strength |
| Formulation | Description | Shellife | 15 min. | 30 min. | 60 min. | 90 min. | (N/mm ) | (N/mm$^2$ ) |
| F12 | Keto, no XLR | 10 min. to 130 d. | 0.11-0.48 | 0.8-1.2 | 1.2-1.6 | 1.3-1.6 | 1.6-2.2 | 0.23-0.13 |
| Um | Commercial product | 100-200 d | 0.12 | 0.25 | 0.10 | - | 1.2 | 0.32 |
| | | | | | | | | |

Table 14 shows that the addition of crosslinker in formulation F11, as compared to F12, leads to somewhat lower peel strength values during the application, but that the tack values of F11 up until at least 130 days of storage are still significantly higher than those of the commercial control floor adhesive. Also, when adding crosslinker to the adhesive based on the carbonyl functional binder, the bond strength remains comparable to the non-crosslinkable control F12, and well above the level demanded in practice (1.0 N/mm) up until at least 130 days of shelflife. The effect of crosslinker addition is very pronounced in improving the shear strength. The shear strength of the crosslinkable adhesive remains constant at 0.43+-0.02 N/mm$^2$ from initial formation to 130 days of storage whereas the shear strength of the non-crosslinkable control F12 has an initial shear strength of 0.22 N/mm$^2$ and that shear strength gradually decays over time to 0.13 N/mm$^2$ after 130 days RT.

Thus, it can be concluded that the balance of cohesion or creep resistance properties (as shown here by the shear strength) and the application properties (tack behaviour, peel strength curves during the adhesive application process) has been significantly improved by introducing a crosslinking mechanism. These properties, including bond strength, remained good up until at least 130 days of storage as a one pot system at room temperature.

Example H: Proof of Crosslinking via a Hot Set Test

The existence of chemical crosslinks in a polymeric material can easily be proven by the so-called hot set test performed in accordance with IEC 60811-2-1. Dumbbell test specimens of the polymeric material are produced using Die C according to ASTM D 412. Extension marks are put on the waist of the specimens 25 mm apart. The test specimen is put in an oven set at a temperature well above the polymers melting/softening point and loaded with a weight to produce a tension well above the uncrosslinked polymer's green strength at this temperature. The oven is equipped with a glass window, so that observation is possible without opening the door. A metal ruler can also be placed adjacent to the specimens in the oven to make observation even easier.

Films of a thickness of 1.1 mm were prepared by drying the following samples, under controlled conditions (23°C and about 50% relative humidity):

- A medium range commercial floor adhesive (Um) based on a thermoplastic polyacrylate dispersion, resin, fillers and conventional additives.
- A similar formulation was prepared based on the crosslinkable binder dispersion WEBM011, without a crosslinker. The emulsion polymerisation of WEBM011 has been described in Example A. This non-crosslinkable sample is called WEBM011 below.
- A sample equivalent to WEBM011 but wherein 0.8 equivalents ADH crosslinker to DAAM crosslinkable monomers in the dispersion was added, was also produced. Water content in the ADH additive was adjusted for. The ADH crosslinker was added via a 10% aqueous premix. This sample is called WEBM011X below.

Dumbbells were produced from these samples. A simple fastening device was assembled, using thin plywood and veneer to prevent the dumbbells being cut off by the fastening clamps. The three specimens were loaded with a weight of 36 grams, creating a tension of 0,054 MPa on the waist of the test specimen. The test specimen was put in an oven at 150° C. After a few seconds an elongation was observed in WEBM011. After approximately one minute the sample was broken. Some seconds after this also Um was broken. The free film of sample WEBM011X was still hanging when the test was terminated after 15 minutes: No elongation could be observed with the WEBM011X. When the oven was opened after 15 minutes, both Um and WEBM011 were more or less melted, behaving in a soft and plastic way. WEBM011 X, however, showed a rubbery behaviour.

TABLE 15:

| Elongation Results | | | |
|---|---|---|---|
| | WEBM011 | Um | WEBM011X |
| 30 seconds | ~20 % | 0% | 0 % |
| 1 minute | Sample Breaks | Sample Breaks | 0 % |
| 15 minutes | - | - | 0 % |

Generally, if a crosslinked sample shows elongation in such a test, this should be recorded, as well as the remaining elongation after 5 minutes of relaxation without load in the oven. Then the remaining elongation is calculated as a percentage of the initial length between the markers. This is the hot set of the material. In this case of the crosslinked film of WEBM011X it was not possible due to zero elongation.

This example shows the following effects of adding a crosslinker in a floor adhesive based on a carbonyl functional binder: i) crosslinking actually occurs, and this is of a chemical nature, not a physical effect; and, ii) the cohesion of the adhesive according to the present invention is strongly improved, in terms of creep resistance, tensile strength, and thermal resistance.

Example I: Explanation to the DSC procedure - Effect of crosslinking on the Tg measured

This example is intended to give further explanation of the measurement of the Tg of the binder and to quantify the effect of crosslinking on the final Tg. The increase due to crosslinking has been measured for a binder with 5% crosslinkable goups (5% DAAM), as well as for a binder with an extremely high level of crosslinkable groups (10% DAAM), to measure the maximum feasible increase in Tg. The crosslinkable binders and the control binders used were WEBM003, WEBM002, WEBM019 and WEBM016 (see Table 16). The preparation of these binders has been described in Examples A and B (Table 1).

The method of Tg determination (including the binder sample treatment, film formation and DSC-sample preparation) has been described hereinbefore. The film formation procedure as described before includes a heating period of 20 hours at 50°C. Two different DSC apparatus have been used: TA Instruments MDSC 2920 and TA Instruments Q2000. As described, the ramp speed was always 5°C/min (unless mentioned otherwise) and the modulation had an amplitude of 1.0 °C and a period at 40 seconds.

The Tg was measured of dried films of the pure binders, and of the binders to which crosslinker had been added, at the pH mentioned. Adjustments of the pH were made by adding a 10% NaOH solution. In the DSC-experiments discussed here ADH was used as the crosslinker. The results of the Tg (always defined as the inflection point of the reversible heat flow curve of the 2nd run, as explained before) have been given in Table 16, as well as deviating drying and / or measurement conditions if applicable.

In case of the binder WEBM003 and the control WEBM002 the binder had been studied in the same non-filled model adhesive formulation as in Example C. This formulation has been shown in Table 2, i.e., the binders WEBM005 and WEBM004 mentioned therein were replaced by WEBM003 and WEBM002, respectively.

All Tg transitions measured were clear, symmetric and sharp, with a width of the Tg transition in the range of 11 to 23°C, and typically a width of 15°C.

TABLE 16:

| Tg values measured for various binders. | | | | | |
|---|---|---|---|---|---|
| | | | | | |
| Binder code | % DAA M | Equivalent crosslinker | Formulation; pH | Tg (°C) | Equipment |
| WEBM002 | 0 | 0 | Pure binder; pH=6.8 | - 9 | A |
| WEBM003 | 5 | 0 | Pure binder; pH=6.9 | - 9 | A |
| | | 0 | Model adhesive, pH=8.4; Film formation: 24 hrs, 23°C (50% RH) | - 8**** | A |

(continued)

| Tg values measured for various binders. | | | | | |
|---|---|---|---|---|---|
| Binder code | % DAA M | Equivalent crosslinker | Formulation; pH | Tg (°C) | Equipment |
| | | 0 | Idem;<br>Film formation: 3 days, 23°C<br>(50% RH) | - 9 | A |
| | | 1.25 | Binder + XLR in model -adhesive; pH=8.3<br>Film formation: 24 hrs, 23°C<br>(50% RH) | 7 | A |
| | | 1.25 | Idem;<br>Film formation: 3 days 23°C<br>(50% RH) | - 7 | A |
| WEBM016 | 0 | 0 | Pure binder; pH=7.1 | - 25 | A |
| WEBM011 | 5 | 0 | Pure binder; pH=7.0 | - 25 | A |
| WEBM019 | 10 | 0 | Pure binder; pH=6.8*** | - 25 | A |
| | | 0.8 * | Binder + XLR + NaOH; pH=8.3; -Dry film thickness: 25 $\mu$m *** | 21 | A |
| | | 0.8* | Binder + XLR + NaOH; pH=8.3; -Dry film thickness: 6 $\mu$m *** | 22 | A |
| | | | | | |
| WEBM019 (repeated experimen t) | 10 | 0 | Pure binder; pH=6.6 *** | - 25 | B |
| | | 0.8 ** | Binder + NaOH + XLR; pH=8.4 *** | - 21 | B |
| | | 0.8** | Idem, pH=8.4, but ramp speed = 20 instead of 5 C/min. *** | - 24 | B |
| | | | | | |

A: Equipment A is TA Instruments MDSC 2920.
B: Equipment B is TA Instruments Q2000.
*: Time between XLR addition and start of the film formation (in-can storage time): 5 days at RT.
**: Time between XLR addition and start of the film formation (in-can storage time): 8 days at RT.
***: The film drying stage, before measuring DSC, includes 20 hours of heating at 50°C.
****: The measured Tg agrees with the calculated Tg according to the Fox equation, when taking the Tg's of the polymeric components (Tg of WEBM003: - 10°C; Tg of the soft tackifying resin: -19°C; Tg of the hard resin: +32°C; the adhesive's composition: see Table 2; Tg(Fox) = -8°C).

It can be concluded that the effect of crosslinking on the Tg values - as measured with the DSC method as defined before - is small.
The increase in Tg due to the presence of crosslinker in the carbonyl functional binder with a level of 5% crosslinkable comonomer (DAAM), was maximum 2°C. In an extreme case with a very high level of crosslinkable comonomer (10% DAAM) the maximum feasible increase in Tg value was +4°C. In the latter DSC experiments the drying films had been exposed to, respectively, 4 hours at 23°C (50% RH), 20 hours at 50°C, and additionally at least 24 hours at 23°C and 50% RH.

It can be expected that the maximum increase in Tg, due to crosslinking of a carbonyl functional binder containing less than 5% keto-functional co-monomers, with a crosslinker, will be about 1°C. The Tg correction due to crosslinking discussed here, includes crosslinking in the can and/or during the sample treatment and/or during film drying and/or during the measurement with DSC (in the DSC-pan, 1st and 2nd run).

## Claims

1. A water-borne, floor or contact adhesive formulation, said water-borne formulation comprising:

   a cross-linkable binder resin having a glass transition temperature (Tg) of less than +10°C;
   optionally a crosslinking agent;
   optionally a tackifier and / or a plasticiser;
   and wherein the volatile organic compound (VOC) level of said formulation is less than 0.5% by weight.

2. The formulation according to claim 1, wherein the cross-linkable binder resin has a glass transition temperature (Tg) in the range from +10°C to -90°C, for example from 0°C to -80°C or from -5°C to -75°C.

3. The formulation according to claim 1 or claim 2, wherein the binder resin has a functionality provided by at least one group selected from: epoxide groups; carbonyl groups; carboxyl groups; hydroxyl groups; thiol groups; amino groups; hydrazide groups; hydrazine groups; hydroxyl-amino groups; oxim groups; oximether groups; oxyamine groups; isocyanate groups; acetoacetate groups; (meth)acryloyl groups; olefinically unsaturated groups; allyl groups; sulfonylvinyl groups; 2-hydroxyethyl sulfone groups; silanol groups; acyloxysilanes; and, alkoxysilane groups, wherein said functional groups may optionally be present in blocked form.

4. The formulation according to any one of claims 1 to 3 comprising a crosslinking agent and wherein:

   i) said cross-linkable binder resin has carbonyl functionality and comprises the polymerization product of a carbonyl monomer and a monomer polymerizable with said carbonyl monomer; and
   ii) said cross-linking agent has carbonyl-reactive amine and / or hydrazine and / or hydrazide groups.

5. The formulation according to claim 4, wherein the carbonyl monomer is selected from monomers with (meth)acrylate, (meth)acrylamide, styryl or vinyl functionalities and preferably said carbonyl monomer is selected from the group consisting of: acrolein; methacrolein; vinyl methyl ketone; vinyl ethyl ketone; vinyl isobutyl ketone; acetoacetoxy esters of hydroxyalkyl (meth)acrylates; diacetoneacrylamide (DAAM); diacetone(meth)acrylamide; formylstyrol; diacetone (meth)acrylate; acetonyl acrylate; 2-hydroxypropyl acrylate-acetyl acetate; 1,4-butanediol acrylate acetylacetate; and, mixtures thereof.

6. The formulation according to claim 4 or claim 5, wherein said monomer polymerizable with the carbonyl monomer is selected from the group consisting of: alkyl (meth)acrylate esters; (meth)acrylic acids; vinyl esters; vinyl monomers and in particular ethylene, styrene, butadiene, isoprene; or, a mixture thereof.

7. A formulation as defined in claim 1, comprising:

   a cross-linkable binder resin comprising a carbonyl functional (meth)acrylate copolymer prepared from a monomer mixture comprising alkyl (meth)acrylate ester monomers, optionally vinyl monomers, and diacetonacrylamide (DAAM) monomers;
   a crosslinking agent having carbonyl-reactive amine and / or hydrazine reactive groups and / or hydrazide reactive groups and / or hydrazone reactive groups; and, optionally
   a tackifier comprising a hard tackifying resin and / or a soft tackifying resin.

8. A formulation as defined in claim 1, comprising:

   a cross-linkable binder resin comprising a carbonyl functional copolymer prepared from a monomer mixture comprising vinyl monomers and diacetonacrylamide (DAAM) monomers;
a crosslinking agent having carbonyl-reactive amine and / or hydrazine reactive groups and / or hydrazide reactive groups and / or hydrazone reactive groups; and, optionally
a tackifier comprising a hard tackifying resin and / or a soft tackifying resin.

9. The formulation according to any one of claims 4 to 8, wherein said crosslinking agent is selected from the group consisting of: oxalic acid dihydrazide; malonic acid dihydrazide; ethylmalonic acid dihydrazide; succinic acid dihydrazide; adipic acid dihydrazide; maleic acid dihydrazide; fumaric acid dihydrazide; tartaric acid dihydrazide; pimelic acid dihydrazide; itaconic acid dihydrazide; 9,10-dihydro-9,10-ethanoanthracene-11,12-dicarboxylic acid dihydrazide; 1,14-tetradecanoic dicarboxylacid dihydrazide; 1,20-icosanedioic acid dihydrazide; valine dihydrazide; orthophthalic acid dihydrazide; isophtalic acid dihydrazide; terephthalic acid dihydrazide; glutaric acid dihydrazide; sebacic acid dihydrazide; cyclohexane dicarboxylic acid bis-hydrazides; azelaic acid bis-hydrazides; carbonic acid hydrazides; carbodihydrazides; bis-semicarbazides; dihydrazines of aromatic hydrocarbons e.g. 1,4-dihydrazinebenzene and 2,3-dihydrazinonaphtalene; dihydrazinoalkynones; and, mixtures thereof.

10. The formulation according to any one of claims 1 to 9, wherein the formulation is provided with a hard tackifying resin comprising a rosin acid or a derivative thereof having a Tg in the range from +20° to +120°C.

11. The formulation according to any one of claims 1 to 10, further **characterized by** a solids content in the range from 20 to 90 wt. %.

12. A method of adhering two surfaces comprising the steps of:

    a) applying the formulation as defined in any one of claims 1 to 11 to one of the substrates;
    b) drying said adhesive to a tacky state; and
    c) assembling the two substrates.

13. A method of adhering two surfaces comprising the steps of:

    a) applying the formulation as defined in any one of claims 1 to 11 to both of the substrates;
    b) drying said adhesive to a tacky state; and
    c) assembling the two substrates.

14. A floor adhesive formulation as defined in any one of claims 1 to 11 for the bonding of a floor material selected from the group consisting of textiles, vinyls, polyolefins, linoleum and rubber, to a subfloor, wherein said formulation is **characterized by** a solids content in the range from 40 to 90 wt.% or 25 to 90 vol.%.

15. A contact adhesive formulation as defined in any one of claims 1 to 11 for use in assembling surfaces, wherein said formulation is **characterized by** a solids content in the range from 20 to 80 wt.% or 20 to 80 vol.%.

Europäisches
Patentamt

European
Patent Office

Office européen
des brevets

**EUROPEAN SEARCH REPORT**

Application Number

EP 10 16 0155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 962 510 A2 (BASF AG [DE]) 8 December 1999 (1999-12-08) * claims 1,4,8,9 * ----- | 1-15 | INV. C09J133/00 C09J201/00 |

TECHNICAL FIELDS
SEARCHED (IPC)

C09J

The present search report has been drawn up for all claims

| Place of search | Date of completion of the search | Examiner |
|---|---|---|
| Munich | 30 August 2010 | Trauner, H |

EPO FORM 1503 03.82 (P04C01)

**ANNEX TO THE EUROPEAN SEARCH REPORT**
**ON EUROPEAN PATENT APPLICATION NO.**                    EP 10 16 0155

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2010

| Patent document cited in search report | | Publication date | Patent family member(s) | | Publication date |
|---|---|---|---|---|---|
| EP 0962510 | A2 | 08-12-1999 | DE | 19824928 A1 | 09-12-1999 |
| | | | US | 6169132 B1 | 02-01-2001 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007291234 B, Izumi Misao
- WO 2006086322 A
- US 6848599 B
- US 6905084 B, Hammarth

### Non-patent literature cited in the description

- **B. Cassel ; M. P. DiVito.** Use of DSC To Obtain Accurate Thermodynamic and Kinetic Data. American Laboratory, January 1994, 14-19
- **B. Wunderlich.** Thermal Analysis. Academic Press, Inc, 1990
- **R. Jordan ; R. Hinterwaldner.** Klebharze - Naturharze - Kohlenwasserstoffharze - Harzdispersionen - Phenolharze. Hinterwaldner Verlag Muenchen, 1994, 96-102
- Acrylic Adhesives. **D.R. Gehman.** Handbook of Adhesives. Van Nostrand Reinhold, 1990
- Emulsion Polymerization and Emulsion Polymers. John Wiley and Sons, 1997